# EUROPEAN PATENT APPLICATION

(11) **EP 4 404 143 A1**
(43) Date of publication of application: **24.07.2024**
(21) Application number: 23151947.1
(22) Date of filing: 17.01.2023
(51) Int. Cl.: G06T 11/20

(54) **COMPUTER-IMPLEMENTED METHOD FOR EFFICIENT DATA EXPLORATION, A RESPECTIVE COMPUTER-READABLE MEDIUM, A DATA EXPLORATION SYSTEM FOR EXPLORING DATA OF A DIGITAL IMAGE, AND A USER DEVICE FOR A DATA EXPLORATION SYSTEM**

(71) Applicant: Mindpeak GmbH, 20359 Hamburg (DE)
(72) Inventor: Lang, Dr. Tobias, 20359 Hamburg (DE); Päpper, Marc, 20257 Hamburg (DE); Ohlson, Lewe, 20535 Hamburg (DE)
(74) Representative: Meissner Bolte Partnerschaft mbB

(57) **Abstract**

Efficiently displaying cell data of a whole slide image on a user device is a difficult task due to the size of the data. This problem is solved by a method with the following steps:
a. Providing of cell data (15) indicating locations of a plurality of cells (11, 12) in a digital image (10), the digital image (10) comprising image data indicating tissue of a plurality of cells (11, 12);
b. Generating of a tree data structure (30) using the cell data (15), wherein the tree data structure (30) comprises leaf nodes (34, 34'), each leaf node (34, 34') indicating the location of a cell in the digital image (10), wherein each non-leaf node (31, 32, 33) of the tree data structure (30) indicates a minimum bounding rectangle of the leaf nodes (34, 34'9 of the respective branch (35) of the tree (30);
c. Receiving of visualization data (26) indicating a region (13) of the digital image (10) to be displayed on a display apparatus (21, 125);
d. Identifying of a sub-branch (35) of the tree data structure (30), the sub branch (35) comprising all leaf nodes (34, 34') of the tree data structure (30) that indicate locations of cells (11, 12) in the digital image (10), respectively, that are located in the region (13) indicated by the visualization data (26);
e. Displaying the locations of the cells (11, 12) indicated by the leaf nodes (34, 34') of the identified sub-branch (35).

## Description

The present disclosure concerns a computer-implemented method for efficient data exploration, a respective computer-readable medium, a data exploration system for exploring data of a digital image, and a user device for a data exploration system.

The current practice in pathology to examine a cell or tissue sample, i.e. from a biopsy or a cytological sample, is manual. The standard of care to assess and define the status of a disease, e.g. cancer, is conducted using microscopic analysis. For this, a doctor takes a biopsy or a cytology smear and sends it to the pathologist for diagnosis. In the pathological laboratory, the biopsy tissue is cut into thin slices while the cells of a cytological smear are attached to a slide. Each slide is stained with dyes such as haematoxylin and eosin stain, also referred to as H&E stain. Using such dyes, the morphology of the cells is made visible. Often, the more complex method of immunohistochemical (IHC) staining is performed, in which antibodies are used to bind on antigens in the tissue sample. In this application, the antigens serve as biomarkers. One of the most well-known biomarkers is Ki67. The antibodies can be linked to a dye. After the antibodies bind to the antigen in the tissue or sample, the dye is activated, and the antigen can be seen under a microscope. Immunohistochemistry is used to help diagnose diseases, such as cancer. It is further used to help to tell the difference between different types and stages of cancer and establishes the ground for treatment decisions.

Manually analyzing the slides is a time consuming and repetitive work, which despite its frequency, remains demanding and error-prone, even for experts. Furthermore, keeping the same quality of standard between a plurality of slides and readers is a challenge and can often not be achieved by manual analysis. If the quality of the analysis is insufficient, wrong treatment decisions can be made, which lead to insufficient patient care.

In light of this, methods have been developed to automatically analyze stained slices of tissue. For this, scanners are used that can digitize large quantities of glass tissue slides that contain the stained tissue to be analyzed. It is known to perform the analysis of the slides based on digital images that are produced by the scanners using conventional systems using computer vision methods. A scanned version of a glass slide with tissue samples is also referred to as a whole slide image, in the following also referred to as WSI. These whole slide images can be obtained in various data formats. In any case, the resolution of such images may be tremendous, reaching up to 200,000 pixels times 100,000 pixels or more. As a result, the data to be analyzed is huge. Automatic systems can be developed that find relevant cells in these whole slide images and provide the cells for further analysis to a pathologist. Given the size of the WSI, the number of relevant cells is huge as well, comprising often more than 100,000 cells. Therefore, it is beneficial performing such analysis on a data center computer, for example a backend server located in a datacenter. Such backend servers often comprise multiple CPUs and GPUs that enable the processing of large quantities of data at scale.

Even though the analysis of the whole slide image can be performed on a backend server, the data has to be presented to a pathologist for further analysis and the final diagnosis. Personal computers and web browsers have limited processing capacity and memory. Processing the results of the analysis in standard data structures, for example providing cell locations as an array, is not feasible as the visualization of these data structures is slow. Therefore, it is an object of the present invention to allow efficient visualization of the WSI and the result of an analysis on a personal computer or user device, such as a mobile device, e.g. a smartphone or a tablet. More in particular, it is an object of the present invention to allow the displaying of cell data on a user device in an efficient manner. It is furthermore in particular an object of the present invention to allow for fast identification and displaying of sub areas of a whole slide image with highlighted cell locations.

The object is solved by the subject-matter of the independent claims.

In particular, the object is solved by a computer-implemented method for efficient data exploration, the method comprising the following steps:
a. Providing of cell data indicating locations of a plurality of cells in a digital image, in particular locations of cells in a whole slide image, the digital image comprising image data indicating tissue of a plurality of cells;
b. Generating of a tree data structure using the cell data, wherein the tree data structure comprises a plurality of leaf nodes, each leaf node indicating the location of a cell in the digital image, a leaf node in particular corresponding to one entry of the cell data, wherein each non-leaf node of the tree data structure indicates a minimum bounding rectangle of the leaf nodes of the respective branch of the tree;
c. Receiving, in particular via a human machine interface, HMI, of visualization data indicating at least one region of the digital image to be displayed on a display apparatus;
d. Identifying of at least one sub-branch of the tree data structure, the sub branch comprising all leaf nodes of the tree data structure that indicate locations of cells in the digital image, respectively, that are located in the at least one region indicated by the visualization data;
e. Displaying the locations of the cells indicated by the leaf nodes of the identified sub-branch on a display apparatus together with the at least one region of the digital image indicated by the visualization data.

A core of the invention is the efficient displaying of cell locations or locations of cells on a display apparatus taking into account reduced processing power of certain computing devices. For example, a user can select at least one region of the digital image using, e.g., a human machine interface, that is to be shown or displayed on the display apparatus. Based on the selected region, the computer-implemented method identifies the sub-branches of the tree data structure that comprise leaf nodes that contain or indicate or point to or reference locations of the respective cells in the digital image. Thus, the cells indicated by respective leaf nodes of the tree data structure that are part of the sub-branches are shown on the display apparatus. The tree data structure therefore provides a very efficient filter mechanism that enables the filtering of cell data also on a user device with reduced hardware capacity. In particular, as the cell data may comprise hundreds of thousands of data points, an efficient filtering mechanism is required. If for example, the cell data, is arranged as a list of data entries, e.g. as an array, identifying the relevant entries in the list, i.e. those entries that correspond to cell locations that are within the at least one region selected by a user, is very cumbersome and finding region-specific subsets of the array is computationally expensive. Therefore, the claimed method takes into account the hardware limitations often found on user devices, for example limitations of processing speed, limitations in main memory or the like.

In one embodiment, the cell data may also comprise the digital image, e.g. a whole slide image. In such a scenario, the cell data and the digital image may be provided to the user device at the same time and therefore reduce the number of connection requests required.

In one embodiment, the providing of the cell data may comprise receiving the cell data by the user device, in particular from a backend server, and the generating may be performed by the user device, in particular by a web browser executed on the user device, preferably in response to receiving the cell data.

In this embodiment, the cell data is received by the user device such that the generating of the tree data structure is also performed on the user device. This has the benefit that the user device can generate the tree data structure in a way that is adapted to the user device and, for example, further preprocessing steps can be performed.

In an alternative embodiment it is also possible that the tree data structure is generated on a backend server and the tree data structure is sent to the user device on-demand, for example based on a user input, such that this processing step is also performed on the backend server. This embodiment has the additional advantage that the user device has to perform less computing and the user can more quickly interact with the data. On-demand fetching of parts of the tree data structure may, for instance, involve fetching the associated different low-resolution representations of cells on higher zoom levels of the display apparatus.

In one embodiment, the method may comprise the following steps:
a. Determining the number of leaf nodes comprised in the determined at least one sub branch of the tree data structure;
b. Comparing the determined number of leaf nodes with a predetermined threshold value; and
c. if it is determined that the determined number of leaf nodes is equal and/or above the threshold value, sending a request to provide a second region of the digital image until it is determined that the number of leaf nodes in the sub branch is below the predetermined threshold and using the second region as the at least one region.

To limit the number of cell locations that are to be displayed, the method may comprise the above steps to limit the number of leaf nodes that are accepted. For this, the number of leaf nodes in the identified sub-branch are compared to a predetermined threshold value. The predetermined threshold value may be chosen by a system operator, a user or may be determined dynamically based on the available memory, processor, or other hardware configurations on the user device. For example, the number of leaf nodes may be set to 100, 1000, 10,000, 100,000, 1 million or 10 million. If it is determined that the number of leaf nodes is above the predetermined threshold value, the method requests the provision of a second region of the digital image. This step may comprise presenting an indication to the user of the user device to request entering a second region, for example drawing a polygon on the screen. These steps are repeated until it is determined that the provided at least one region does not lead to a sub-branch with more leaf nodes than the predetermined threshold value. Once it is determined that at least one region leads to a sub-branch with less leaf nodes than the predetermined threshold value, the region is accepted and used as the at least one region for the remainder of the method.

In one embodiment, the method may, for each leaf node indicated by the at least one sub-branch of the tree data structure, determine, in particular by the user device, whether a cell location indicated by a leaf node is inside the at least one region indicated by the visualization data;
and may comprise displaying the location of the cell indicated by a leaf node only if the cell location is inside the at least one region indicated by the visualization data.

The above-described embodiment does allow the provision of visualization data that indicates a region that is not a rectangle. As mentioned earlier, the non-leaf nodes of the tree data structure indicate a minimum bounding rectangle of the leaf nodes of the respective branch of the tree. Using the above-described embodiment, it is possible to allow a user to provide a non-rectangular selection, for example a triangle or a circle or any polygon, and only show cell locations that are within the selected region. Using this, the information shown to the user is reduced which improves the work result and provides a greater freedom to the user. The above embodiment is particularly efficient as the filtering has only to be performed for the leaf nodes in the identified at least one sub-branch of the tree data structure. Therefore, not all leaf nodes have to be considered.

The determination whether a cell location indicated by a leaf node is inside the at least one region indicated by the visualization data, can either be performed on the user device or by the user device or in an alternative embodiment on a backend server.

In one embodiment, the visualization data may designate a polygon, wherein the coordinates of the edges of the polygon correspond to pixel coordinates of the digital image.

In the aforementioned embodiment, the visualization data may designate a polygon. Thus, it is possible to obtain any shapes and any sizes of region definitions that may be used to determine the cell locations to display. This is facilitated in that the coordinates of the edges, i.e. the corners, of the polygon correspond to pixel coordinates of the digital image. In that way it is possible to create a mapping between the polygon and the digital image such that the polygon location can be clearly identified in the digital image.

In one embodiment, the generating of the tree data structure may be performed such that each non-leaf node may indicate a number of less or equal child nodes than a predetermined maximum child node number, e.g. less or equal than 1000, 500, 100, 50, 10, 5 or 2 nodes.

It is beneficial to define constraints when generating the tree data structure. One of these constraints may determine the number of allowed child nodes of a single non-leaf node. Having fewer child nodes, results in a faster search down a sub-branch of the tree data structure. On the other hand, the depth of the tree increases. Therefore, a tradeoff of tree depth and width in each layer has to be considered. It is therefore beneficial to define the number of child nodes that are allowed for each non-leaf node.

In one embodiment, the location of cells may be represented as pixel coordinates in the digital image.

To further speedup the processing, it is beneficial to directly store the locations of cells as pixel coordinates within the digital image. Using this approach, it is not required to add a further processing step that maps locations of cells to pixel coordinates.

In one embodiment, the cells may be of at least one cell class, wherein the displaying may include biomarker-positive and/or biomarker-negative tumor cells.

To enhance the information carried by the digital image, it is preferable that the cells in the digital image are of at least one cell class. For example, the cells may be highlighted as being of a biomarker-positive or biomarker-negative tumor type with regards to the staining of the nucleus or membrane based on an antibody staining. As a result, it is possible to determine regions that contain a large number of tumorous cells of a particular type, which is important for the pathologist conducting a diagnosis.

In one embodiment, Ki67 is used as biomarker such that antibodies bind to the antigen, i.e. Ki67 in the tissue or cell sample. As the antibody may be linked to a dye, the dye is activated once the antibodies bind to the antigen. As a result, the activated dye may be visible in the digital image. Of course, other biomarkers may be analyzed and the present invention is not limited to the use of Ki67.

In one embodiment, the tree data structure may be implemented as an r-tree.

An r-tree may be used to store multidimensional information, such as the cell coordinates in the digital image. Each non-leaf node in the r-tree may in one embodiment store a reference or address or pointer to all its child nodes as well as a bounding box of all entries within each child node. The leaf nodes may store the cell locations. Moreover, each node in the r-tree may have a unique identifier, for example a memory address, so that each node can be accessed without having to traverse the entire tree. Using an r-tree is beneficial in that the r-tree is a well-known data structure for which efficient algorithms exist.

In one embodiment, the method may further comprise the following steps:
a. Determining, in particular by the user device, a number of pixels contained in the visualization data;
b. Determining whether the number of pixels is above a predetermined pixel size threshold value;
c. if it is determined that the number of pixels contained in the visualization data is above the predetermined pixel size threshold value, rejecting the received visualization data and requesting, in particular via the display apparatus, providing of at least one second region in the digital image as visualization data.

In order to further speed-up the processing, it is possible to check whether the number of pixels indicated by the visualization data exceeds a threshold value, i.e. the number of pixels that the at least one region surrounds in the digital image. If that is the case, there is a high probability that the number of cells to visualize will be too high as well. Thus, it may be advantageous to immediately ask the user to provide a second region such that the number of pixels is below the threshold value and using that second region for further processing in the method. This check is even more advantageous if performed directly after receiving the visualization data from the user device or the user so that the check can be performed either directly by the user device or the web browser that is showing a website with the digital image.

The object of the invention is further in particular solved by a computer-readable medium storing instructions that when executed by at least one processor cause the at least one processor to implement any of the methods as described above. Of course, the computer-readable medium may also comprise multiple computer-readable media which are separated such that some parts of the method are executed on a user device and some parts are executed on a backend server. Thus, the computer-readable medium is to be understood to also encompass distributed systems.

The object of the present invention is further in particular solved by data exploration system for exploring data of a digital image with a user device and a backend server, the system comprising:
a. the backend server, comprising:
   i. a storage unit adapted for storing cell data indicating locations of cells in the digital image, the digital image comprising image data indicating tissue of a plurality of cells;
   ii. a server communication unit adapted for:
      1. Sending at least a part of the digital image to be displayed on a display apparatus to the user device;
      2. Sending of the cell data to the user device;
b. the user device comprising:
   i. a human machine interface adapted for receiving of visualization data, the visualization data indicating at least one region of the digital image to be displayed on a display apparatus;
   ii. a user communication unit adapted to:
      1. Receive, from the backend server, the sent part of the digital image;
      2. Receive the cell data from the backend server;
   iii. A tree data structure generation unit adapted to generate a tree data structure using the cell data, wherein the tree data structure comprises a plurality of leaf nodes, each leaf node indicating the location of a cell in the digital image, a leaf node in particular corresponding to one entry of the cell data, wherein each non-leaf node of the tree data structure indicates a minimum bounding rectangle of the leaf nodes of the respective branch of the tree;
   iv. A sub-branch identification unit adapted to identify at least one sub-branch of the tree data structure, the sub-branch comprising all leaf nodes of the tree data structure that indicate locations of cells in the digital image, respectively, that are located in the at least one region indicated by the visualization data;
   v. a display apparatus adapted for displaying the locations of the cells indicated by the leaf nodes of the determined sub-branch together with the at least one region of the digital image indicated by the visualization data.

The object of the present invention is further in particular solved by a user device for a data exploration system, in particular according to the aforementioned system, for exploring data of a digital image for use with a backend server, the user device comprising:
a. a human machine interface adapted for receiving of visualization data, the visualization data indicating at least one region of the digital image to be displayed on a display apparatus;
b. a user communication unit adapted to:
   i . Receive, from the backend server, a part of the digital image;
   ii. Receive cell data from the backend server;
c. a tree data structure generation unit adapted to generate a tree data structure using the cell data, wherein the tree data structure comprises a plurality of leaf nodes, each leaf node indicating the location of a cell in the digital image, a leaf node in particular corresponding to one entry of the cell data, wherein each non-leaf node of the tree data structure indicates a minimum bounding rectangle of the leaf nodes of the respective branch of the tree;
d. a sub-branch identification unit adapted to identify at least one sub-branch of the tree data structure, the sub-branch comprising all leaf nodes of the tree data structure that indicate locations of cells in the digital image, respectively, that are located in the at least one region indicated by the visualization data;
e. a display apparatus adapted for displaying the locations of the cells indicated by the leaf nodes of the determined sub-branch together with the at least one region of the digital image indicated by the visualization data.

It is to be understood that the aforementioned computer-implemented method may be implemented by a data exploration system as well as the user device described above. As a result, it is explicitly disclosed that all method steps and preferred embodiments may also be implemented by the respective system and device.

Further embodiments are disclosed by the dependent claims.

In the following, different embodiments are described with reference to the accompanying figures, wherein:
- Fig. 1: shows the annotation of a glass slide and the resulting whole slide image;
- Fig. 2: shows an annotated whole slide image;
- Fig. 3: shows an annotated whole slide image together with a magnified region;
- Fig. 4: shows a data exploration system,
- Fig. 5: shows a tree data structure;
- Fig. 6: shows a method for data exploration;
- Fig. 7: shows a flow chart showing a method for optimizing the number of leaf nodes;
- Fig. 8: shows a flow chart indicating a method for optimizing visualization data; and
- Fig. 9: shows a system for data exploration.

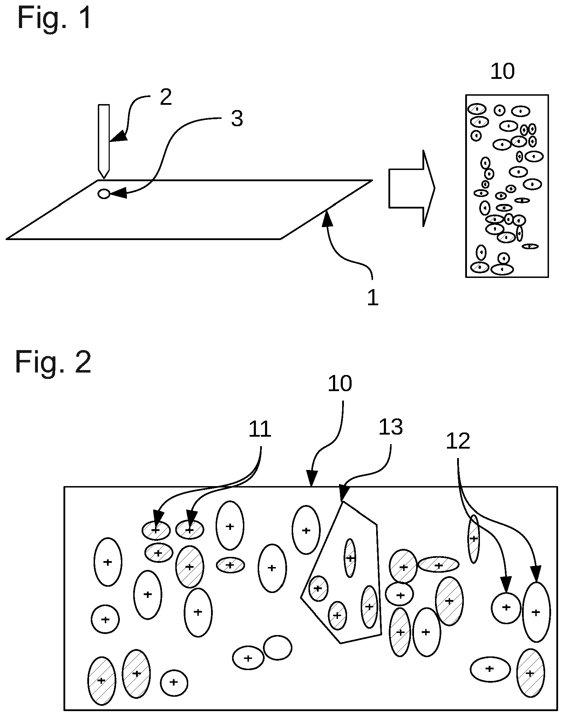

Fig. 1 shows the digital annotations of a glass slide 1. For this, a glass slide 1 is fitted with a tissue sample or cytological smear. In preparation, the tissue sample or cytological smear is stained using a dye highlighting the biomarker, for example Ki67. Using this, only cells expressing Ki67, i.e. biomarker positive tumor cells, bind to the antigen linked to the dye are highlighted. Ki67 for example marks cells with high growth. Biomarker negative tumor cells remain unstained in that case. Alternatively, other biomarkers can be used and the aforementioned example is not to be understood to limit the invention to the use of Ki67.

In order to facilitate a diagnosis, it is of interest to the pathologist to know the number of relevant cells in a particular region. For this, cells in the WSI 10 are marked using a digital pen 2, for example a mouse or cursor, such that multiple markings 3 are applied to the glass slide.

The whole slide image 10 can also be abbreviated as WSI 10. The WSI 10 can be stored as a TIFF image or another lossless format on a storage device. Of course, it is also possible to apply compression algorithms to obtain a digital image with a reduced size, e.g. to obtain a JPEG image. Moreover, the WSI 10 can have a resolution of more than 100,000 times 200,000 pixels. To simplify the accessing of the WSI 10, a read library may be provided, which allows programmatically accessing the WSI 10 in various resolutions. For example, the read library may indicate that the WSI 10 is provided with a resolution of, for example, 0.25 or 0.5 µm per pixel. Other resolutions are possible as well. In particular, accessing the WSI 10 may be made with respect to a different degree of magnification. Therefore, it is possible to access the WSI 10 with different degrees of detail. Given the size of the WSI 10, the number of annotated cells in each WSI 10 is significant. In order to automatically identify the cell locations on a WSI 10, artificial intelligence systems may be used. Such systems are known and it is therefore assumed as part of this disclosure, that the WSI 10 together with the cell locations is provided. In one embodiment, not the outlines of the cells are provided but the locations of the cell centers are provided as cell locations.

As is shown in Fig. 2, the WSI 10 comprises biomarker positive tumor cells 11 and biomarker negative tumor cells 12. The cell locations are stored as cell data in a data structure, e.g. an array. In the visualization of Fig. 2, only a fraction of the cells is shown. In particular, the visualization of Fig. 2 may be in a magnification of the WSI 10 that only shows a few of the actual cells. Such an image may be shown on a user device to a doctor, e.g. a pathologist, that wants to make a diagnosis for a patient. In order to support the diagnosis process, the pathologist or user of the user device may draw a polygon 13 on the screen, identifying a specific region of the WSI 10 that is of particular interest to the user. To draw the polygon 13, the user may use a drawing tool which may be provided by the user device. The drawing tool may allow the user to define the corners or edges of the polygon 13.

In one embodiment, the user does not have to close the polygon 13, but the user device may be adapted to connect the first and the last corner drawn by the user. In addition, the user may be able to select from different shapes that may be used to select the region of interest. For example, the user may use a circle or oval tool which allows drawing a circle or oval on the WSI 10. Alternatively, or in addition, the user may use a rectangular or square drawing tool to define the region of interest which may also be expressed as the polygon 13.

The presentation of the WSI 10 and the cell centers may be provided by a computer running a web browser, wherein the web browser is executing source code that allows for presentation of the WSI 10 and the cell data as well as the manipulation of the region selection tool.

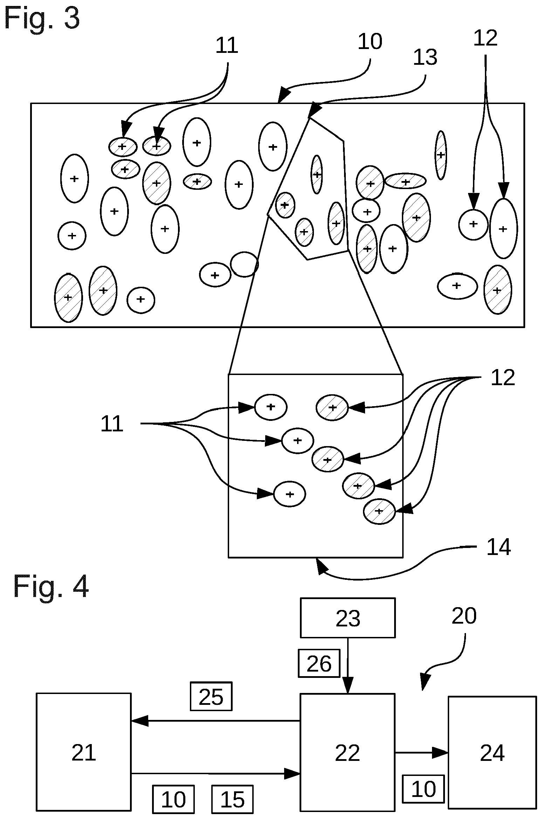

Fig. 3 shows the WSI 10 of Fig. 2, the cell data 15, i.e. the cell centers, and in addition a magnified region 14 of the WSI 10 which is defined by the polygon 13. In the magnified region 14, all biomarker positive tumor cells 11 and all biomarker negative tumor cells 12 are highlighted by highlighting the cell centers. To distinguish between the biomarker positive tumor cells 11 and the biomarker negative tumor cells 12, different colors can be used.

The user who is presented with the magnified region 14, can now use this information to make a diagnosis and determine a treatment for the patient.

Fig. 4 shows a system 20 for data exploration. The system 20 comprises a backend server 21, a computer or browser 22, a human machine interface 23 as well as a display apparatus 24. The backend server 21 is adapted to receive a user request 25 which indicates a WSI 10. The backend server 21 in response to receiving the request 25 provides either the entire WSI 10, or a part of the WSI 10, e.g. a specific view on the WSI 10 in a specific magnification. Thus, the backend server 21 does not have to provide the full resolution of the WSI 10 to the user device, but may also provide a low resolution WSI 10 in order to save bandwidth. In addition to the WSI 10, the backend server 21 is adapted to provide cell data 15 that comprises a list of cell center locations in the WSI 10.

The communication between the backend server and the computer 22 may be conducted over a switched network connection. For example, the network connection may be the internet or any other type of connection between two separated computing entities.

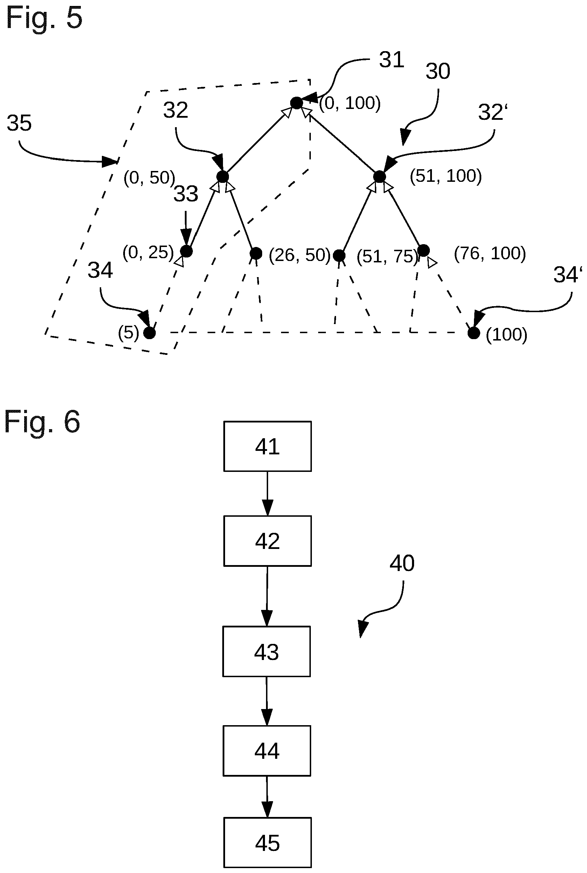

The computer 22 is adapted to display the received WSI 10 using the display apparatus 24. As a result, a user may analyze the WSI 10. During the analysis, the user determines a region that is of particular interest to the user. More specifically, the user may determine a region in which a number of biomarker positive or biomarker negative cells are located. To view the details of this region of interest, the user may draw a polygon or another geometric figure as described with respect to Fig. 3. The indication of the region is provided to the computer 22 as visualization data 26. The computer 22 is further adapted to receiving the visualization data 26 and generate a tree data structure. To generate the tree data structure, the computer 22 is adapted to process the cell data 15. The generation of the tree data structure will be described in more detail with respect to Fig. 5.

Fig. 5 shows a tree data structure 30 in a simplified form that is generated from the received cell data 15. The tree data structure 30 comprises a root node 31, which has two child nodes 32, 32'. The child nodes, 32, 32' each have child nodes of their own. At the very bottom of the tree data structure 30, leaf nodes 34, 34' are arranged. The non-leaf nodes 31, 32, 32' each define a pixel range. In the simplified example of Fig. 5, only one dimension is shown. It is to be understood that each node may define more than one dimension, e.g. an x and y dimension of an image data. In case of two dimensions, e.g. X and Y coordinates, each non-leaf node 31, 32, 32' defines a rectangle that encloses the coordinate ranges of its child nodes. In the example of Fig. 5, the root node defines the pixel range over the entire x axis from 0 to 100 pixels. The child nodes 34, 34' each define non-overlapping regions on the x axis of the WSI 10. For example, child node 32 defines the range from 0 to 50 and child node 32' defines the region from coordinates 51 to 100. The leaf nodes 34, 34' each define a single coordinate in the WSI 10. Thus, the leaf nodes 34, 34' define the locations of cells, or more in particular the location of cell centers in the WSI 10. Using this specific arrangement, it is possible to traverse the tree to identify all cells or cell locations in a specific region of the WSI 10.

Therefore, using the above-defined tree data structure 30, it is possible to traverse the tree in an efficient manner and identify all cell locations that are located within the region defined by the user. In particular, it is possible to identify a sub-branch 35 of the tree data structure 30 that comprises all nodes 31, 32, 33, 34 that comprise all leaf nodes that indicate cell locations inside the region defined by the user. For this, it is not required to look at all entries of the tree data structure 30 but only to a very limited number of nodes, which is very efficient. In particular, the aforementioned scheme to retrieve the cell locations in the WSI 10 is very efficient and can therefore also be performed in a computer 22 which is located at the end user and therefore less capable than a server computer located in a datacenter, i.e. has less memory and/or less processing power. Even more, the results are retrieved quickly, in particular compared to identifying all relevant cell locations in a list. The average time complexity to retrieve the results is O(log(n)). This is important in particular comparted to a storage scheme where an array is used which has an average time complexity for searching items O(n), where n defines the length of the array.

To generate the tree data structure 30, initially the root node 31 is created. After the root note 31 is created, the algorithm may divide the coordinate range defined in the parent node 31 into two or more ranges. The number of allowed nodes per tree depth may be predetermined in order to optimize the search for leaf nodes. For example, the number of nodes per tree depth may be defined to be less than 5. In such a scenario, the range defined by the respective parent may be divided into at most 5 sub regions that are used to define nodes in that particular tree depth. The steps may be repeated until only the individual coordinates are remaining such that the leaf nodes 34, 34' indicate single coordinates in the WSI 10.

Fig. 6 shows a flowchart for a method for displaying cell locations 40. In a first step 41, cell data 15 is provided to e.g. a computer 24. For example, cell data 15 may be provided together with at least a part of the WSI 10 and be arranged as an array or any type of list data structure. In a generating step 42, a tree data structure 30 is generated based on the cell data 15. For this, the above-described method may be used. In a next receiving step 43, visualization data 26 is received from a user that indicates at least one region in a WSI 10 for which cell data is to be shown. To identify the cell data that is to be shown in the WSI 10, the identifying step 44 identifies a sub-branch 35 of the generated tree data structure 30 that contains all cell data located in the region selected by the user. In the last displaying step 45, the identified cell data is displayed on top of the WSI 10, e.g. as an overlay to visually highlight all cells that are of relevance to the user.

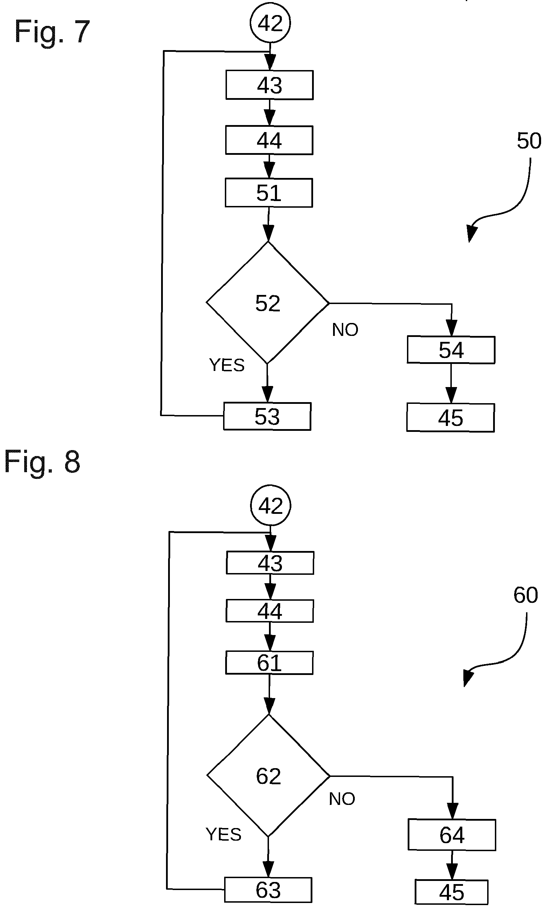

Fig. 7 is a flow chart showing a method for optimizing the number of leaf nodes 50. The method 50 enhances the method 40 as described with respect to Fig. 6. After the generation of the tree data structure 30 in the generation step 42, the method 50 progresses as before with a step of receiving 43 visualization data 26. Moreover, the method 50 continues with the identification step 44 during which a sub-branch 35 of the tree data structure 30 is identified. Instead of immediately displaying the identified cell data of the sub-branch 35 of the tree data structure 30, method 50 introduces a determining step 51, during which the number of leaf nodes that are comprised in the sub-branch 35 of the tree data structure 30 are determined. In a next comparing step 52, the determined number of leaf nodes are compared to a predetermined threshold value. If the comparing step 52 determines that the number of leaf nodes in the sub-branch 35 of the tree data structure 30 is above the predetermined threshold value, a requesting step 53 is executed during which the user is asked to provide a different region indicating an area of the WSI 10. This second region is then used as new visualization data 26 during a repeated execution of the reception 43, during the identification 44 of the sub-branch 35, as well as the determination 51 of the number of leaf nodes.

If the subsequent comparing step 52 indicates that the number of leaf nodes in the sub-branch 35 of the tree data structure 30 is not above the predetermined threshold value, a filtering step 54 may be executed. During the filtering step 54, it is determined whether each cell location indicated by the identified leaf nodes lie within the region 13 indicated by the user. In particular, in cases where the region 13 indicated by the user is not a rectangle, some locations that are indicated by leaf nodes 34, 34' do in fact not lie within the region 13 indicated by the user as the tree data structure 30 is only allowing for the storing of rectangular data. Thus, during the filtering step 54, all leaf nodes 34, 34' that indicate cell locations that are outside the region 13 indicated by the user, are discarded. As a result, during the following displaying step 45, only those cell locations are highlighted on the WSI 10 which are lying inside the region 13 indicated by the user.

Fig. 8 shows a further flowchart that indicates a method for optimizing the visualization data 60. The goal of the method 60 is to apply a heuristic early during the algorithm to prevent the selection of a region 13 which most likely contains too many cells and therefore too many cell locations that can be efficiently displayed on a user device, such as a computer 22. The method 60 of Fig. 8 starts after receiving the visualization data 26 by determining the number of pixels that are contained or indicated by the visualization data 26 in a determining step 61. For this, the number of pixels contained in the region 13 that is indicated by the user are counted or determined. In a comparing step 62 it is determined if the determined number of pixels exceeds a predetermined pixel size threshold value. If it is determined that the number of pixels indicated by the visualization data 26 exceeds the predetermined pixel size threshold value, the region 13 provided by the user is rejected during a rejecting step 63 and the user is requested to provide a second region which is received as a new visualization data 26 during step 43 as indicated by the method of Fig. 6.

Consequently, the aforementioned steps are repeated until a comparing of the determined number of pixels in the visualization data 26 indicates that the number of pixels is below the predetermined pixel size threshold value. In case the number of pixels is below the predetermined pixel size threshold value, an accepting step 64 is executed during which, for example, a confirmation may be shown to the user.

In the last step, the visualization data 26 is displayed, i.e. the cells indicated by the leaf nodes 34, 34' of the determined sub-branch 35 of the tree data structure 30 are highlighted on the WSI 10.

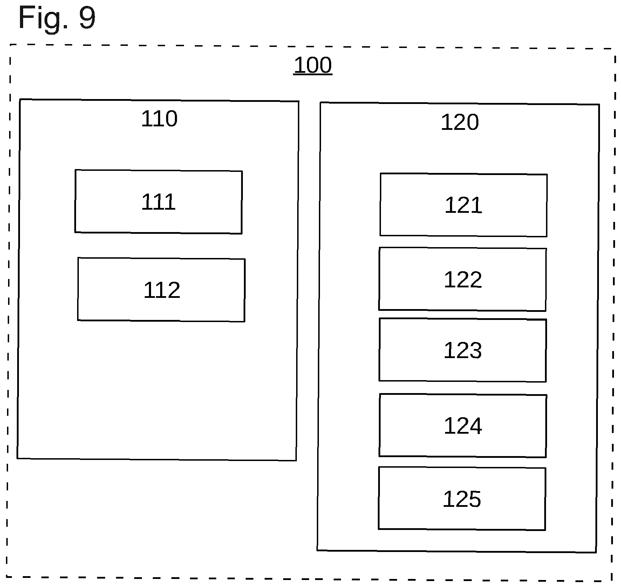

Fig. 9 shows a schematic view of a system 100 for data exploration. The system 100 comprises a backend server 110 as well as a user device 120.

The backend server 110 comprises a storage unit 111 as well as a server communication unit 112. It is to be understood that the backend server 110 may also be a distributed server or may represent a datacenter, for example. The storage unit 111 is adapted for storing image data such as a WSI 10. The server communication unit 112 is adapted to send and receive data over a switched communication network, such as the internet, e.g. using the TCP/IP protocol stack. Using the server communication unit 112, the backend server 110 communicates with the user device 120.

The user device 120 comprises a human machine interface 121, a tree data structure generation unit 122, a sub-branch identification unit 123, a user communication unit 124, and a display apparatus 125. The user communication unit 124 is adapted to communicate over the switched communication network. In particular, the user communication unit 124 is adapted to communicate with the server communication unit 112 to receive image data, such as a WSI 10 and cell data 15.

The tree data structure generation unit 122 is adapted to process the received WSI 10 and cell data 15. Specifically, the tree data structure generation unit 122 is adapted to generate a tree data structure 30 for the cell data 15 received. The display apparatus 125 is adapted to display the WSI 10, i.e. the display apparatus 125 is adapted to view a digital image 10. In addition, the display apparatus 125 is adapted to run a web browser, which is adapted to display a website that comprises the image data 10. After displaying the WSI 10, the human machine interface 121 is adapted to be used by a user to input or define a region 13 or multiple regions on the WSI 10. The identified region is provided as visualization data 26 by the human machine interface 121 to the sub-branch identification unit 123. The sub-branch identification unit 123 is adapted to identify a sub-branch 35 of the generated tree data structure 30, which comprises all leaf nodes 34, 34' that indicate cell locations that are located within the region 13 defined by the visualization data 26. The display apparatus 125 is further adapted to highlight all cell locations in the WSI 10, which are indicated by leaf nodes in the identified sub-branch 35 of the tree data structure 30.

At this point, it should be pointed out that all parts described above are to be regarded individually, even without features additionally described in the respective context, even if these have not been explicitly identified individually as optional features in the respective context, e.g. by using "in particular", "preferably", "for example", "e.g.", "possibly", etc., and in combination or any sub combination as independent designs or further developments of the invention as defined in particular in the introduction of the description as well as in the claims.

### Reference numerals:

- 1: Glass slide
- 2: Pen
- 3: Marking
- 10: Whole slide image
- 11: biomarker-positive tumor cells
- 12: biomarker-negative tumor cells
- 13: Polygon
- 14: Magnified region
- 15: Cell data
- 20: System
- 21: Backend server
- 22: Computer/Browser
- 23: Human Machine Interface
- 24: Display Apparatus
- 25: User request
- 26: Visualization data
- 30: Tree data structure
- 31: Node
- 32, 32": Child node
- 33: Node
- 34, 34': Leaf node
- 35: Sub branch
- 40: Method for displaying cell locations
- 41: Providing cell data step
- 42: Generating tree data structure
- 43: Receiving visualization data step
- 44: Identifying step
- 45: Displaying step
- 50: Method for optimizing number of leaf nodes
- 51: Determining step
- 52: Comparing step
- 53: Requesting step
- 54: Filter step
- 60: Method for optimizing visualization data
- 61: Determining step
- 62: Comparing step
- 63: Rejecting step
- 64: Accepting step
- 100: System
- 110: Backend-Server
- 111: Storage Unit
- 112: Server communication unit
- 120: User device
- 121: Human Machine Interface
- 122: Tree data structure generation unit
- 123: Sub-branch identification unit
- 124: User communication unit
- 125: Display apparatus

## Claims

1. Computer-implemented method for efficient data exploration (40), the method comprising the following steps:
a. Providing (41) of cell data (15) indicating locations of a plurality of cells (11, 12) in a digital image (10), in particular locations of cells (11, 12) in a whole slide image (10), the digital image (10) comprising image data indicating tissue of a plurality of cells;
b. Generating (42) of a tree data structure (30) using the cell data (15), wherein the tree data structure (30) comprises a plurality of leaf nodes (34, 34'), each leaf node (34, 34') indicating the location of a cell (11, 12) in the digital image (10), a leaf node (34, 34') in particular corresponding to one entry of the cell data (15), wherein each non-leaf node (31, 32, 32', 33) of the tree data structure (30) indicates a minimum bounding rectangle of the leaf nodes (34, 34') of the respective branch (35) of the tree (30);
c. Receiving (43), in particular via a human machine interface (23, 121), HMI, of visualization data (26) indicating at least one region (13) of the digital image (10) to be displayed on a display apparatus (24, 125);
d. Identifying (44) of at least one sub-branch (35) of the tree data structure (30), the sub branch (35) comprising all leaf nodes (35) of the tree data structure (30) that indicate locations of cells (11, 12) in the digital image (10), respectively, that are located in the at least one region (13) indicated by the visualization data (26);
e. Displaying (45) the locations of the cells (11, 12) indicated by the leaf nodes (34) of the identified sub-branch (35) on a display apparatus (24, 121) together with the at least one region (13) of the digital image (10) indicated by the visualization data (26).

2. Computer-implemented method according to claim 1, **characterized in that** the providing (41) of the cell data (15) comprises receiving the cell data (15) by the user device (120), in particular from a backend server (21, 110), and the generating (42) is performed by the user device (120), in particular by a web browser executed on the user device (120), preferably in response to receiving the cell data (15).

3. Computer-implemented method according to any of the preceding claims, **characterized by**
a. Determining (51) the number of leaf nodes (34, 34') comprised in the determined at least one sub branch (35) of the tree data structure (30);
b. Comparing (52) the determined number of leaf nodes (34, 34') with a predetermined threshold value; and
c. if it is determined that the determined number of leaf nodes (34, 34') is equal and/or above the threshold value, sending (53) a request to provide a second region of the digital image (10) until it is determined that the number of leaf nodes (34, 34') in the sub branch (35) is below the predetermined threshold and using the second region as the at least one region (13).

4. Computer-implemented method according to any of the preceding claims, **characterized by**
for each leaf node (34, 34') indicated by the at least one sub branch (35) of the tree data structure (30), determining, in particular by the user device (121), whether a cell location indicated by a leaf node (34, 34') is inside the at least one region (13) indicated by the visualization data (26);
displaying (45) the location of the cell indicated by a leaf node (34, 34') only if the cell location is inside the at least one region (13) indicated by the visualization data (26), in particular when the visualization data does not indicate a rectangle.

5. Computer-implemented method according to any of the preceding claims, **characterized in that**
the visualization data (26) designates a polygon (13), wherein the coordinates of the edges of the polygon correspond to pixel coordinates of the digital image (10).

6. Computer-implemented method according to any of the preceding claims, **characterized in that**
the generating (42) of the tree data structure (30) is performed such that each non-leaf node (31, 32, 32', 33) indicates a number of less or equal child nodes than a predetermined maximum child node number, e.g. less or equal than 1000, 500, 100, 50, 10, 5 or 2 nodes.

7. Computer-implemented method according to any of the preceding claims, **characterized in that**
the locations of cells are represented as pixel coordinates in the digital image (10).

8. Computer-implemented method according to any of the preceding claims, **characterized in that**
the cells are of at least one cell class, wherein the displaying includes biomarker-positive (11) and/or biomarker-negative tumor cells (12).

9. Computer-implemented method according to any of the preceding claims, **characterized in that**
the tree data structure (30) is implemented as an r-tree.

10. Computer-implemented method according to any of the preceding claims, **characterized by**
a. Determining (61), in particular by the user device (121), a number of pixels contained in the visualization data (26);
b. Determining (62) whether the number of pixels is above a predetermined pixel size threshold value;
c. if it is determined that the number of pixels contained in the visualization data (26) is above the predetermined pixel size threshold value, rejecting (63) the received visualization data (26) and requesting (53), in particular via the display apparatus (24, 125), providing of at least one second region (13) in the digital image (10) as visualization data (26).

11. Computer-readable medium storing instructions that when executed by at least one processor cause the at least one processor to implement any of the methods according to any of the preceding claims.

12. A data exploration system (100) for exploring data of a digital image (10) with a user device (120) and a backend server (110), the system (100) comprising:
a. the backend server (110), comprising:
i. a storage unit (111) adapted for storing cell data (15) indicating locations of cells (11, 12) in the digital image (10), the digital image (10) comprising image data indicating tissue of a plurality of cells;
ii. a server communication unit (112) adapted for:
1. Sending at least a part of the digital image (10) to be displayed on a display apparatus (125) of the user device (120);
2. Sending of the cell data (15) to the user device (120);
b. the user device (120), comprising:
i. a human machine interface (121) adapted for receiving of visualization data (26), the visualization data (26) indicating at least one region (13) of the digital image (10) to be displayed on a display apparatus (125);
ii. a user communication unit (124) adapted to:
1. Receive, from the backend server (110), the sent part of the digital image (10);
2. Receive the cell data (15) from the backend server (110);
iii. A tree data structure generation unit (122) adapted to generate a tree data structure (30) using the cell data (15), wherein the tree data structure (30) comprises a plurality of leaf nodes (34, 34'), each leaf node (34, 34') indicating the location of a cell (11, 12) in the digital image (10), a leaf node (34, 34') in particular corresponding to one entry of the cell data (15), wherein each non-leaf node (31, 32, 33) of the tree data structure (30) indicates a minimum bounding rectangle of the leaf nodes (34', 34') of the respective branch (35) of the tree;
iv. A sub-branch identification unit (123) adapted to identify at least one sub-branch (35) of the tree data structure (30), the sub branch (35) comprising all leaf nodes (34, 34') of the tree data structure (30) that indicate locations of cells (11, 12) in the digital image (10), respectively, that are located in the at least one region (13) indicated by the visualization data (26);
v. a display apparatus adapted (125) for displaying the locations of the cells (11, 12) indicated by the leaf nodes (34, 34') of the determined sub-branch (35) together with the at least one region (13) of the digital image (10) indicated by the visualization data (26).

13. A user device (120) for a data exploration system (100), in particular according to claim 12, for exploring data of a digital image (10) for use with a backend server (110), in particular according to claim 12, the user device (120) comprising:
a. a human machine interface (121) adapted for receiving of visualization data (26), the visualization data (26) indicating at least one region (13) of the digital image (10) to be displayed on a display apparatus (125);
b. a user communication unit (124) adapted to:
i . Receive, from the backend server (110), a part of the digital image (10);
ii. Receive cell data (15) from the backend server (110);
c. a tree data structure generation unit (122) adapted to generate a tree data structure (30) using the cell data (15), wherein the tree data structure (30) comprises a plurality of leaf nodes (34, 34'), each leaf node (34, 34') indicating the location of a cell (11, 12) in the digital image (10), a leaf node (34, 34') in particular corresponding to one entry of the cell data (15), wherein each non-leaf node (31, 32, 33) of the tree data structure (30) indicates a minimum bounding rectangle of the leaf nodes (34, 34') of the respective branch (35) of the tree (30);
d. a sub-branch identification unit (123) adapted to identify at least one sub-branch (35) of the tree data structure (30), the sub branch (35) comprising all leaf nodes (34, 34') of the tree data structure (30) that indicate locations of cells (11, 12) in the digital image (10), respectively, that are located in the at least one region (13) indicated by the visualization data (26);
e. a display apparatus (125) adapted for displaying the locations of the cells (11, 12) indicated by the leaf nodes (34, 34') of the determined sub-branch (35) together with the at least one region (13) of the digital image (10) indicated by the visualization data (26).
